# EUROPEAN PATENT SPECIFICATION

(11) **EP 4 258 288 B1**
(45) Date of publication and mention of the grant of the patent: **04.11.2026**
(21) Application number: 21899411.9
(22) Date of filing: 14.01.2021
(51) Int. Cl.: G21C 17/12, G21C 7/10, G21C 7/12, G21C 9/02

(54) **METHOD FOR MEASURING DROP TIME OF A CONTROL ROD CLUSTER INTEGRATED WITH A ROD POSITION MEASUREMENT DEVICE**
VERFAHREN ZUR MESSUNG DER FALLZEIT EINES STEUERSTABCLUSTERS INTEGRIERT MIT EINER VORRICHTUNG ZUR MESSUNG DER STEUERSTABPOSITION
PROCÉDÉ DE MESURE DU TEMPS DE CHUTE D'UN GRAPPIN DE BARRES DE COMMANDE INTÉGRÉ À UN DISPOSITIF DE MESURE DE POSITION DES BARRES DE COMMANDE

(30) Priority: 05.12.2020 CN 202011417550
(43) Date of publication of application: 11.10.2023
(73) Proprietor: Nuclear Power Operations Research Institute (NPRI), Shanghai 200135 (CN)
(72) Inventor: CHANG, Zhengke, Jiaxing, Zhejiang 314300 (CN); ZHANG, Minghui, Jiaxing, Zhejiang 314300 (CN); HUANG, Yuan, Jiaxing, Zhejiang 314300 (CN); TIAN, Ye, Jiaxing, Zhejiang 314300 (CN); XU, Shaohua, Jiaxing, Zhejiang 314300 (CN); LIU, Xinxin, Jiaxing, Zhejiang 314300 (CN); ZHU, Weijian, Jiaxing, Zhejiang 314300 (CN); MA, Yiming, Jiaxing, Zhejiang 314300 (CN); XU, Shengfeng, Jiaxing, Zhejiang 314300 (CN); CHAO, Bo, Jiaxing, Zhejiang 314300 (CN); TAO, Ning, Haikou, Hainan 570000 (CN); YANG, Zihua, Jiaxing, Zhejiang 314300 (CN); LANG, Desong, Mudanjiang, Heilongjiang 157000 (CN); WANG, Qichao, Jiaxing, Zhejiang 314300 (CN)
(74) Representative: Patentanwaltskanzlei Matschnig & Forsthuber OG
(86) International application number: PCT/CN2021/071640
(87) International publication number: WO 2022/116367

(56) References cited:
- CN-A- 102 280 150
- CN-A- 103 854 708
- CN-A- 104 332 195
- CN-A- 107 833 643
- CN-A- 109 243 644
- CN-A- 111 696 692
- CN-U- 204 575 828
- US-A1- 2013 177 123
- US-B1- 6 192 096

## Description

### TECHNICAL FIELD

The present disclosure generally relates to a technical field of rod drop time measurement for nuclear power plants, and more particularly, to a method for measuring drop time of a control rod cluster integrated with a rod position measurement device.

### BACKGROUND

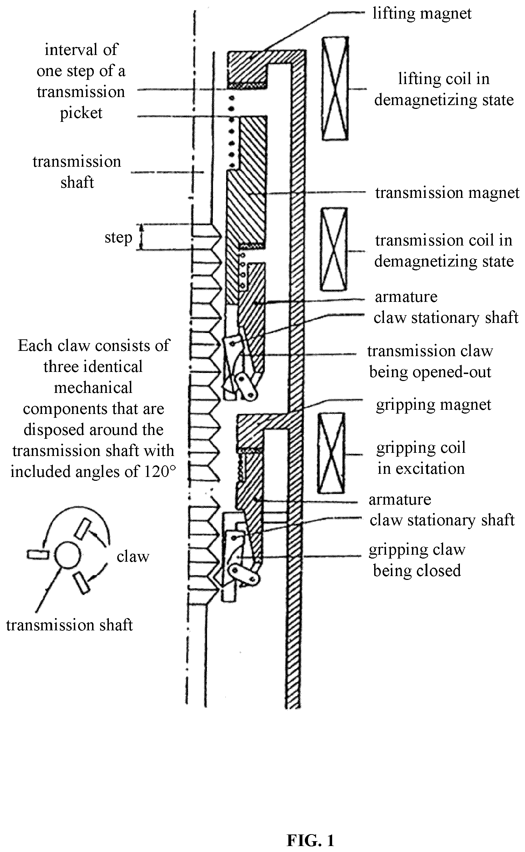

Rapid regulation of reactor power in pressurized water reactor nuclear power plants is mainly realized through controlling lifting and lowering of control rod clusters. The lifting and lowering of the rod clusters are driven by a set of electromagnetic drive mechanism, such as Control Rod Drive Mechanism (CRDM). As shown in FIG.1, when a control rod pin-holding claw) into the drive shaft tooth groove. When the control rod is stationary, a holding coil is powered on, and a holding hook jaw (also known as a gripper jaw) swings into tooth grooves of a drive shaft.

Emergency shutdown of reactor is achieved by opening a shutdown circuit breaker, cutting off a CRDM power supply, and allowing control rod clusters to fall into a reactor core under action of gravity. Length of rod cluster drop time directly determines whether safety shutdown can be realized. The rod cluster drop time is required to be less than a safety analysis value (for example, the safety analysis value for Qinshan Phase II Nuclear Power Plant is 2.4 seconds). Therefore, the rod cluster drop time must be measured before start-up of the reactor each time.

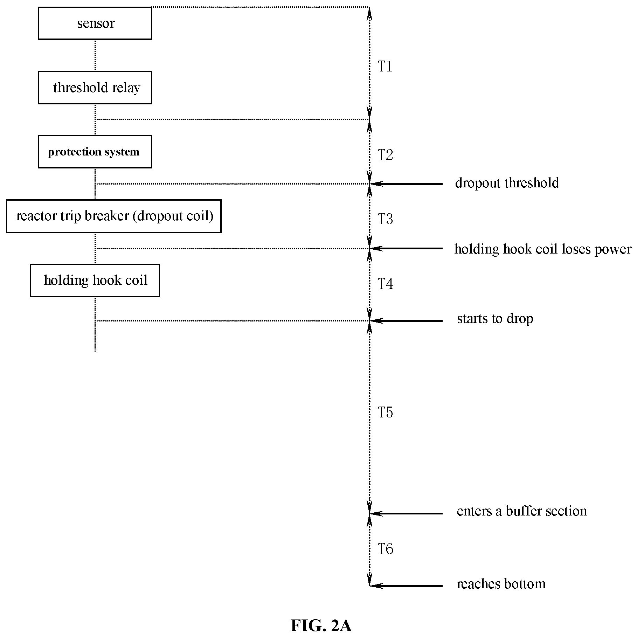

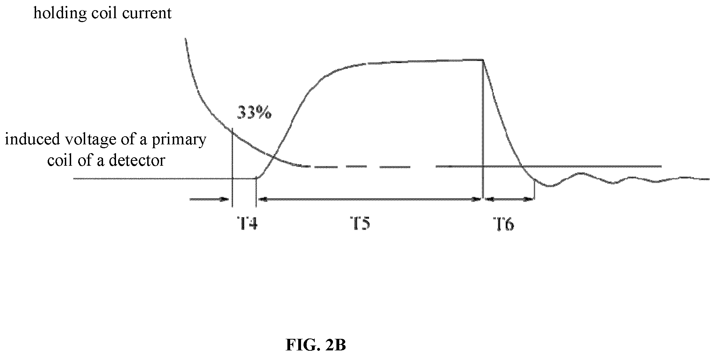

The rod cluster drop time consists of six sections, as shown in FIG. 2.
T4 is a time period from a holding coil current falling to 33% of a rated value to a rod cluster starting to drop, and should be shorter than 150ms;
T5 is a time period from the rod cluster starting to drop to entering a buffer section;
T6 is a time period from the rod cluster entering the buffer section to reaching bottom of the buffer section, where T4+T5+T6 should be shorter than 3s in a hot state.

The control rod cluster drop time is affected by an entire driving line which is composed of a driving mechanism, a guide cylinder assembly, a fuel assembly and a control rod cluster assembly. During a drop process, the control rod cluster may brush against control rod guide tubes in the guide cylinder assembly and the fuel assembly, and a buffer is provided by a buffer section of the control rod guide tube in the fuel assembly and a buffer spring under the control rod cluster assembly. Length of the buffer section of the control rod guide tube in the fuel assembly in a typical power plant is 640mm. When the control rod cluster drops to the bottom of the reactor, it enters the buffer section by length of about 550-560mm, which is 34.5 steps. The buffer spring under the control rod cluster assembly has length of 22.45mm, and maximum compression length during the dropping process is about 5mm.

As the control rod cluster and its connected drive shaft are located in environment with high temperature and high pressure created by the nuclear reactor, measurement of their positions is generally realized by a rod position detector based on electromagnetic induction principle. Measurement of the three time periods T4, T5 and T6 is also realized by the rod position detector based on non-contact measurement.

A typical rod position detector mainly includes a primary coil, a measurement coil, an auxiliary coil, a coil frame, a sealing shell and an outer sleeve. Taking Qinshan Phase II Nuclear Power Plant as an example, the rod position detector has total length of 4006mm, an inner diameter of 154mm, and an outer diameter of 300mm. The primary coil is shaped as a long solenoid with about 2000 turns and a wire diameter of 1.97mm, which is wound along an entire stroke. Both the measurement coil and the auxiliary coil are secondary coils, each of which has 1700 turns, width of 2cm, and a wire diameter of 0.23mm, and is coaxial with the primary coil. The primary coil is used to generate an alternating magnetic field, the measuring coil is used to form a rod position code, and the auxiliary coil is used to regulate a current of the primary coil.

The drive shaft is made of a magnetic material, while the sealing shell, the coil frame, and the outer sleeve of the detector as well as other components in the detector have relatively low magnetic permeability. In such a condition, whether the drive shaft passes through the measurement coil greatly affects an induced voltage. Whether the top of the drive shaft is above or below the measurement coil can be determined by monitoring an induced voltage of the measurement coil at a particular position. As long as a sufficient number of measurement coils are arranged to monitor an induced voltage signal of each coil, positions of the drive shaft and the control rod cluster can be roughly determined.

To roughly determine the position of the control rod cluster, a sufficient number of measurement coils may be arranged. A number and spacing of the measurement coils are determined based on stroke length of the driving shaft and a desired resolution. To reduce a number of wiring between the detector and a signal processing channel and reduce a number of signal processing devices, the measurement coils need to be grouped.

Taking Qinshan Phase II Nuclear Power Plant as an example, length of each mechanical step of the drive shaft is 15.875mm, and an entire stroke is 228 mechanical steps. A resolution of the detector is 8 mechanical steps (i.e., 127mm). There are 31 measurement coils which are divided into five groups including A, B, C, D, and E. An entire measurement stroke is 256 mechanical steps. The measurement coils are grouped as follows.

First, if a measuring coil C1 is wound at 1/2 height of the detector's measurement stroke, by monitoring its induced voltage (referred to an effective value hereinafter) V1, it can be known whether the rod position is in a section [0, 128) or [128, 256).

Further, if coils C21 and C22 are respectively wound at 1/4 and 3/4 height of the detector's measurement stroke, by monitoring an induced voltage V21 of C21, it can be known whether the rod position is in a section [0, 64) or [64, 128), and by monitoring an induced voltage V22 of C22, it can be known whether the rod position is in a section [128, 192) or [192, 256).

In fact, these three coils divide the entire measurement stroke into four sections with equal length. By monitoring the induced voltages of these three coils, it is possible to know which section the rod position is in. Levels of the induced voltages and the corresponding rod position are listed in a following table.

| Induced voltage | | | Section of rod position | Position of rod cluster |
|---|---|---|---|---|
| V21 | V1 | V22 | | |
| Low | Low | Low | [0, 64) | 0 |
| High | Low | Low | [64, 128) | 1 |
| High | High | Low | [128, 192) | 2 |
| High | High | High | [192, 256) | 3 |

If C21 and C22 are reversely connected in series to form a group (referred to as C2), as V21 and V22 are always in a sane phase, an output voltage of C2 is V2=|V21-V22|. Levels of the induced voltages and the corresponding rod position are listed in a following table.

| Inductive voltage | | After shaping | | Section of rod position | Position of rod cluster |
|---|---|---|---|---|---|
| V1 | V2 | Low→0, High→1 | | | |
| Low | Low | 0 | 0 | [0, 64) | 0 |
| Low | High | 0 | 1 | [64, 128) | 1 |
| High | High | 1 | 1 | [128, 192) | 2 |
| High | Low | 1 | 0 | [192, 256) | 3 |

Similarly, if four coils C31, C32, C33 and C34 are respectively wound at 1/8, 3/8, 5/8 and 7/8 height of the detector's measurement stroke, and are connected in series in turn to form a group C3, the entire measurement stroke is divided into 8 sections with equal length. By monitoring the three voltages of V1, V2 and V3 (=|V31-V32+V33-V34|), it is possible to determine which section the rod position is in, and the measurement resolution reaches 32 steps.

Further, if eight coils C41, C42 ... and C48 are respectively wound at 1/16, 3/16, 5/16, 7/16, 9/16, 11/16, 13/16 and 15/16 height of the detector's measurement stroke, and are connected in series in turn to form a group C4, the entire measurement stroke is divided into 16 sections with equal length. By monitoring the four voltages of V1, V2, V3 and V4 (=|V41-V42+V43...-V48|), it can be determined which section the rod position is in, and the measurement resolution reaches 16 steps.

Further, if 16 coils C51, C52 ... and C516 are respectively wound at 1/32, 3/32, 5/32 ... and 31/32 height of the detector's measurement stroke, and are connected in series in turn to form a group C5, the entire measurement stroke is divided into 32 sections with equal length. By monitoring the five voltages V1, V2, V3, V4, and V5 (=|V51 - V52 + V53... - V516|), it can be determined which section the rod position is in, and the measurement resolution reaches 8 steps.

Generally, groups C1, C2, C3, C4, and C5 are called groups E, D, C, B, and A, respectively. If the coils are numbered from low to high according to their positions, the coils in each group are numbered as follows.
Coil in Group E (first group): 16
Coils in Group D (second group): 8 24
Coils in Group C (third group): 4 12 20 28
Coils in Group B (fourth group): 2 6 10 14 18 22 26 30
Coils in Group A (fifth group): 1 3 5 7 9 11 13 15 17 19 21 23 25 27 29 31

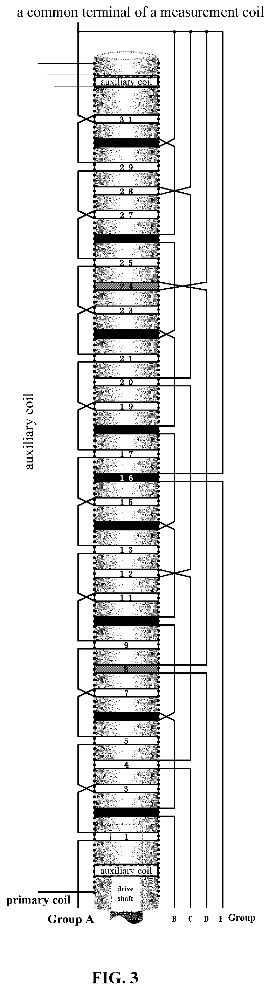

FIG. 3 illustrates a structure of the detector and numbers of the coils.

A typical rod cluster drop time T5 is about 1.5 seconds to 2 seconds. As a normal rod position measurement signal takes a long time to process, the rod cluster drop time cannot be calculated through the normal rod position measurement signal. Instead, the rod cluster drop time is generally calculated by measuring an induced voltage of the primary coil of the rod position detector. Referring to FIG. 2, the rod cluster drop time is obtained based on the holding coil current and the induced voltage of the primary coil.

An existing method for measuring the rod cluster drop time includes leading an induced voltage signal of the primary coil from a rod position device room to a rod control device room, and then is connected to a dedicated recorder or a test cabinet at the same time with a current signal of the holding coil. Due to a large number of control rods in the entire unit (for example, there are 33 control rod clusters in Qinshan Phase II Nuclear Power Plant is 33, and there are 61 control rod clusters in a typical one-million-kilowatt nuclear power unit), a number of simultaneous processing channels is limited when the dedicated recorder or the test cabinet is utilized for measurement. Therefore, a group switching method is generally used for measurement. Specifically, after a test is completed for a subgroup of rods, a voltage signal transfer cable of the primary coil needs to be moved to another subgroup of rods, and a current signal transfer cable of the holding coil needs to be moved to another subgroup of rods, which requires a lot of switching of wiring during the test. Document US2013/177123A1 discloses systems and methods of monitoring position information of a control rod in a nuclear reactor, including detecting an output signal induced by movement of a control rod with respect to at least one detection coil of the control rod, the output signal having identifiable characteristics representative of a plurality of positions of the control rod within the at least one detection coil, and processing the identifiable characteristics to derive the positions of the control rod within the at least one detection coil.

### SUMMARY

### TECHNICAL PROBLEMS

### TECHNICAL SOLUTIONS

The invention is set out in the appended set of claims. Embodiments of the present disclosure provide a method for measuring drop time of a control rod cluster integrated with a rod position measurement device.

The method for measuring the drop time of the control rod cluster integrated with the rod position measurement device provided in embodiments of the present disclosure may save signal switching during a test process, enhance automation level of measurement and analysis, and reduce critical path time of nuclear reactor start-up planning occupied by measurement of the drop time.

Further, the method for measuring the drop time of the control rod cluster integrated with the rod position measurement device provided in embodiments of the present disclosure may introduce the rod drop reference signal into the rod position measurement device. The rod position measurement device comprehensively analyzes the rod drop reference signal and a signal of a rod position detector to obtain the drop time.

Further, with the method for measuring the drop time of the control rod cluster integrated with the rod position measurement device provided in embodiments of the present disclosure, a drop time measurement and analysis module is integrated in a rod position measurement cabinet with a drop time measurement and analysis function.

According to the invention, a method for measuring drop time of a control rod cluster integrated with a rod position measurement device is provided, wherein the method is used to measure the drop time of each control rod cluster, and includes the following steps:
S1, monitoring a voltage Ua of coils in Group A to capture a rod cluster drop signal; S2, searching a point (tmax, Vmax) with a maximum drop speed or with a local maximum drop speed; S3, retroactively calculating, from tmax, an end of a time period T4 when the control rod cluster starts to drop; S4, retroactively searching, from a minimum value point of a drop reference signal DROPref, a start of the time period T4 when the drop reference signal DROPref drops from a maximum value to 33% of the maximum value; S5, determining, from tmax forward, a time point t6 when a drop speed of the control rod cluster is lower than 0; S6, calculating an end of a time period T6 when the drop speed of the control rod cluster is 0; S7, searching an end of a time period T5 when the drop speed of the control rod cluster drops rapidly; S8, calculating a time point t7 when the drop speed returns to 0 after t6; S9, calculating a time point t8 when the drop speed returns to 0 after t7; S10, calculating a time point t9 when the drop speed returns to 0 after t8; and S11, performing calculation on results obtained in the steps S1 to S11 to obtain calculation results, and saving and outputting the calculation results in a form of file.

Optionally, S1 includes: S1.1, performing digital filtering on the voltage Ua of the coils in Group A to obtain a first filtered voltage; S1.2, transforming a waveform of the first filtered voltage into broken lines and removing outlier points on the broken lines; S1.3, calculating a first median sequence; S1.4, searching a first minimal value point P2 (tmin, Vmin) of the first median sequence; S1.5, searching backward, from the first minimal value point, a median point P1 with a value smaller than Vmin/2; S1.6, determining a point P0 where a line connecting the first minimal value point P2 and the median point P1 intersects with a 0-axis; and S1.7, if a slope of a line connecting P0 and P2, a time difference between P0 and P2, and an amplitude difference between P0 and P2 are within predetermined ranges respectively, determining that the control rod cluster starts to drop.

According to the invention, step S2 includes: S2.1, performing digital filtering on a voltage Up of a primary coil to obtain a second filtered voltage; S2.2, transforming a waveform of the second filtered voltage into broken lines and removing outlier points on the broken lines; S2.3, calculating a second median sequence; S2.4, searching among the second median sequence a point P1, wherein absolute values of the point P1 and preceding three points of the point P1 exceed 0.5; S2.5, if a value of P1 is negative, inverting the second median sequence; S2.6, searching backward, from P1, a point P0 with a value smaller than or equal to 0, and searching forward, from P1, a point P2 with a value smaller than or equal to 0; and S2.7, calculating a maximal value among a section between P0 and P2 to obtain Pmax (tmax, Vmax).

Optionally, S3 includes: retroactively searching, from tmax, a point P04 with an amplitude smaller than 0.4*Vmax, retroactively searching, from tmax, a point P02 with an amplitude smaller than 0.2*Vmax, and determining an end of the time period T4 where a line connecting P04 and P02 intersects with a 0-axis.

Optionally, S4 includes: obtaining a subsequence of a value sequence corresponding to the drop reference signal DROPref before tmax, determining a minimum value point and a maximum value point of the subsequence, and searching backward, from the minimum value point, a point with a value greater than 33% of a maximum value of the subsequence.

Optionally, S5 includes: searching, among the second median sequence and from tmax, a point with a value smaller than 0, and setting a time point of the point to be t6.

Optionally, S6 includes: determining a point where a line connecting a point corresponding to t6 and a point corresponding to (t6-1) inserts with the 0-axis as an end t6 of the time period T6.

Optionally, S7 includes: S7.1, retroactively searching, from t6, a point P05 with an amplitude greater than 50% of Vmax; S7.2, retroactively searching, from t6, a point P075 with an amplitude greater than 75% of Vmax; S7.3, determining a horizontal line Line1 passing through Pmax (tmax, Vmax); S7.4, determining a straight line Line2 passing through P05 and P075; and S7.5, determining a point where Line1 intersects with Line2, wherein a time point corresponding to the point is an end of the time period T5.

Optionally, S11 includes: S11.1, calculating the time period T4 by subtracting the start of T4 from the end of T4, calculating the time period T5 by subtracting the end of T4 from the end of T5, and calculating the time period T6 by subtracting the end of T5 from the end of T6; S11.2, verifying that T4, T5, T6 are within a threshold range; S11.3, verifying positivity of t7, t8 and t9; and S11.4: saving and outputting calculation results in the form of file.

### ADVANTAGES

The method for measuring the drop time of the control rod cluster integrated with the rod position measurement device provided in the embodiments of the present disclosure may save signal switching during a test process, enhance automation level of measurement and analysis, and reduce critical path time of nuclear reactor start-up planning occupied by measurement of the drop time.

### BRIEF DESCRIPTION OF THE DRAWINGS

FIG. 1 is a structural diagram of a CRDM;
FIG. 2A is a schematic diagram of drop time of a control rod cluster, where T4 is a time period between a time point when a holding coil current falls to 33% of a rated value and a time point when the control rod cluster starts to drop, and is shorter than 150ms, T5 is a time period between a time point when the control rod cluster starts to drop and a time point when the control rod cluster enters a buffer section, T6 is a time period between a time point when the control rod cluster enters the buffer section and a time point when the control rod cluster reaches bottom of the buffer section, T4+T5+T6 in a hot state is shorter than 3s.
FIG. 2B is a schematic diagram of characteristic points of a rod drop waveform;
FIG. 3 illustrates arrangement and connection of coils of a rod position detector;
FIG. 4 is a structural diagram of a rod position measurement device according to an embodiment;
FIG. 5A is a schematic diagram of characteristic points of a rod drop waveform according to an embodiment;
FIG. 5B is a schematic diagram of a calculation and analysis result of a drop time of a control rod cluster according to an embodiment;
FIG. 6 is a flow chart of measurement and analysis of drop time of a control rod cluster according to an embodiment;
FIG. 7A is a flow chart of capturing a rod cluster drop signal according to an embodiment;
FIG. 7B is a schematic diagram of a rod cluster drop waveform according to an embodiment;
FIG. 8 is a flow chart of searching a maximum drop speed or a local maximum drop speed according to an embodiment;
FIG. 9 is a flow chart of searching a time point when a drop speed of a control rod cluster drops rapidly according to an embodiment; and
FIG. 10 is a schematic diagram of a calculation and analysis result of drop time of a control rod cluster according to an embodiment.

The analysis result is that there is a drop of a control rod cluster caused by normal power off.
Referring to the figures, through Up induced voltage analysis, the result is normal.

The drop reference signal is normal.
T4=0.062 normal <=0.15,
T5=1.2855 normal <=2.4,
T5+T6=1.778 normal <=3.2;
A first bounce at T7 is normal.

A duration T7 of the bounce is normal.

A second bottoming at T8 is normal.

A second bounce at T9 is normal.

Detailed data are as follows.
t0=20200309 194540.313 dt=0.0005;
T4Bgn- 440 (when DROPref falls to 80% of its maximum value);
T4Bgn 446 (start of T4: when DROPref drops to 33% of its maximum value);
T4End 564 (end of T4: a point where a line connecting a point corresponding to 40% of Vmax and a point corresponding to 20% of Vmax intersects with a horizontal axis);
T5End 3135 (end of T5: a point where a line connecting a point corresponding to 75% of Vmax and a point corresponding to 50% of Vmax intersects with a horizontal line passing through Vmax);
T6End 4120 (end of T6: a point of a line connecting a point which has a value smaller than 0 for the first time after Vmax and corresponds to t6 with a preceding point of the point intersects with the horizontal axis;);
T7End 4337 (t7: a point greater than 0 for the first time after t6);
T8End 4573 (t8: a point smaller than or equal to 0 for the first time after t7);
T9End 4750 (t9: a point greater than 0 for the first time after t8);
T4+ 0.062 (T4End - T4Bgn- when DROPref drops to 80% of its maximum value;
T4 0.059 (T4End - T4Bgn when DROPref drops to 33% of its maximum value);
T5 1.2855 (T5End - T4End);
T6 0.4925 (T6End - T5End);
T56 1.778 (T5+T6);
T7 0.1085 (t7-T6End);
T8 0.118 (t8-t7);
T9 0.0885 (t9-t8).

### BEST EMBODIMENTS

### DETAILED DESCRIPTION

Embodiments of the present disclosure provide a method for measuring drop time of a control rod cluster integrated with a rod position measurement device. Specific implement ways of the present disclosure will be described in detail in conjunction with embodiments.

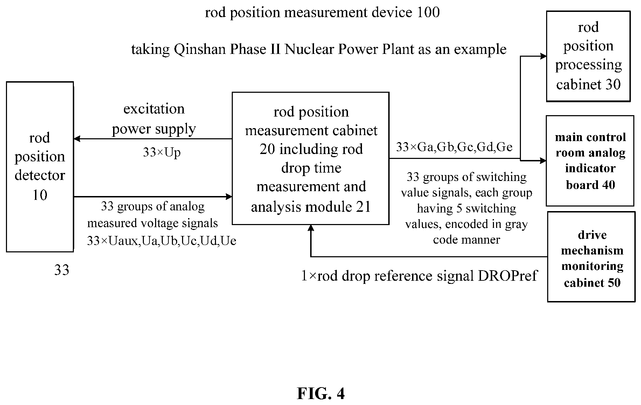

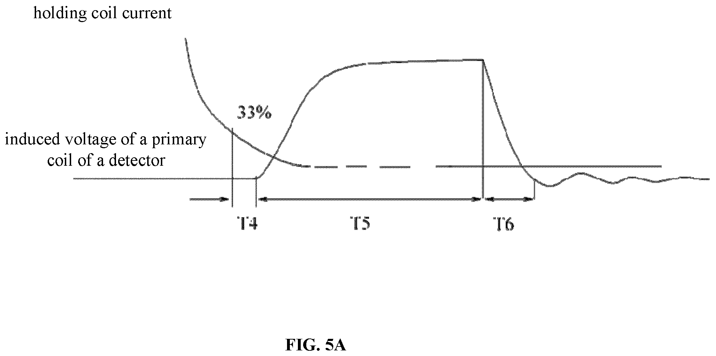

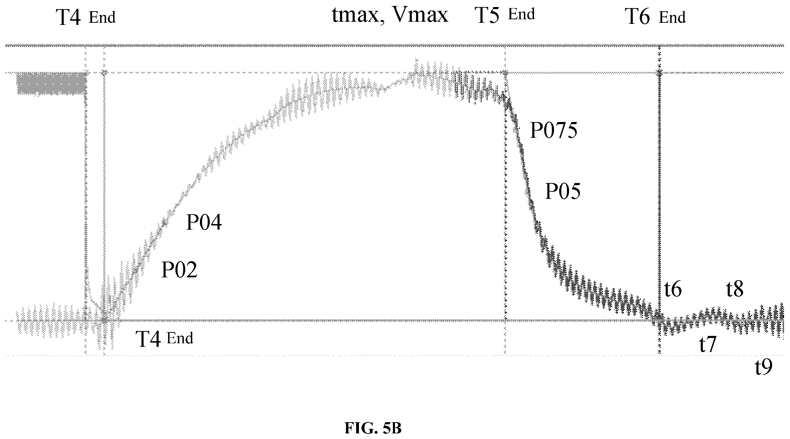

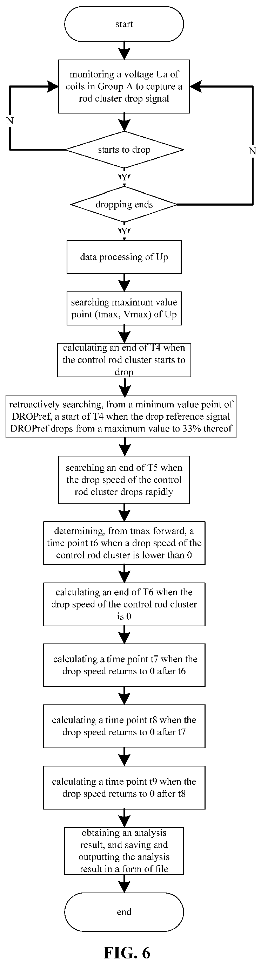

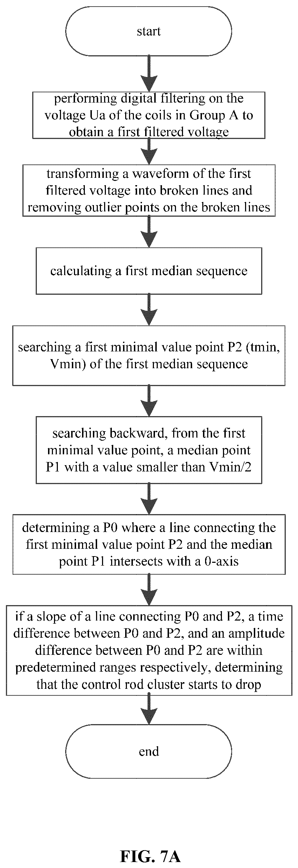

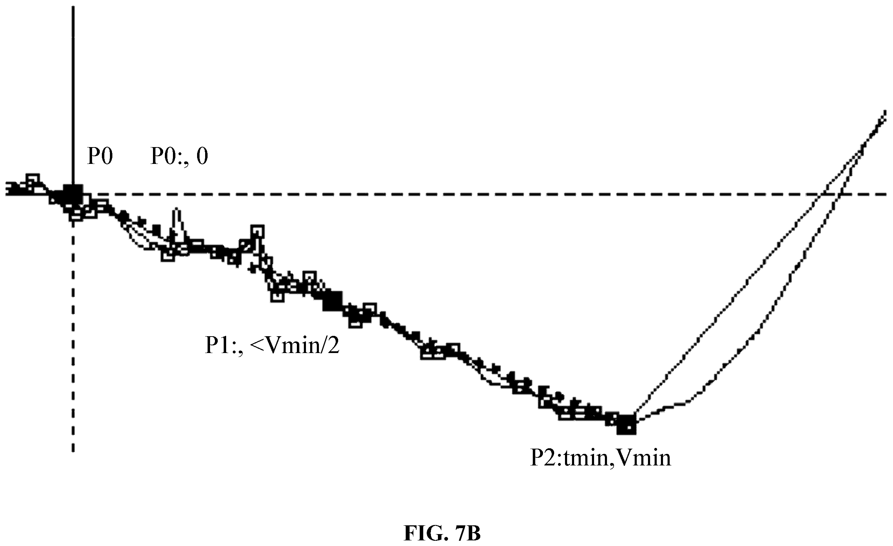

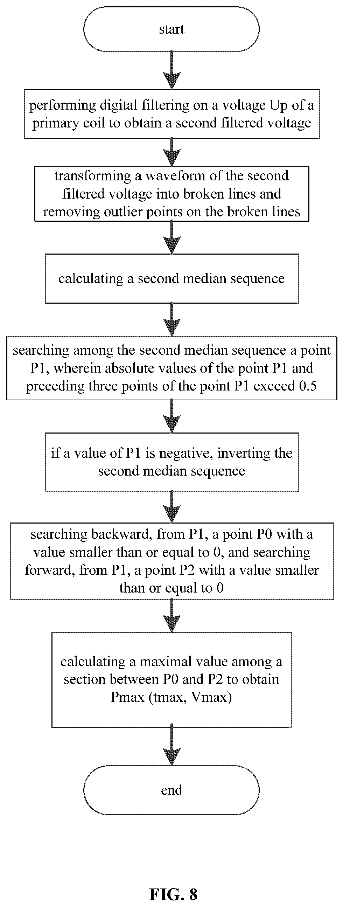

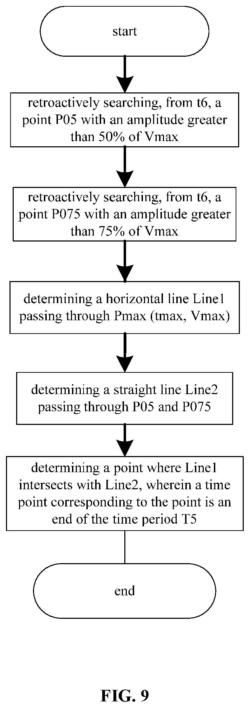

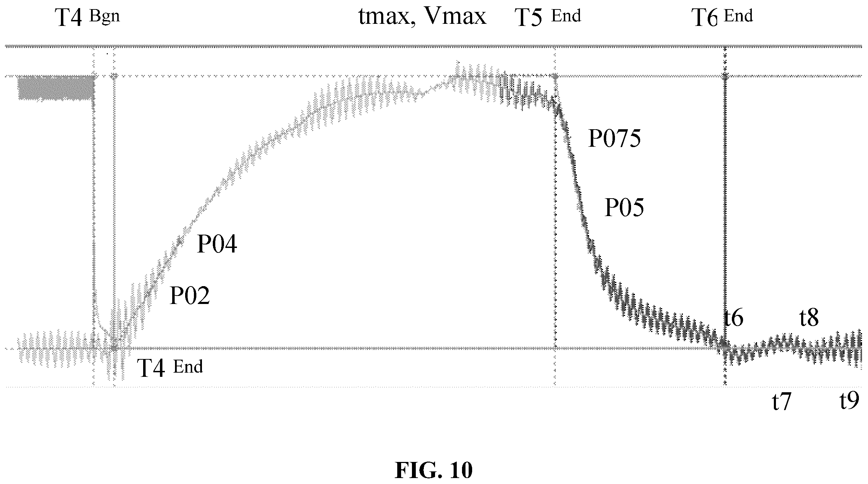

Referring to FIG. 1 to FIG. 10, FIG. 1 is a structural diagram of a CRDM; FIG. 2A is a schematic diagram of drop time of a control rod cluster; FIG. 2B is a schematic diagram of characteristic points of a rod drop waveform; FIG. 3 illustrates arrangement and connection of coils of a rod position detector; FIG. 4 is a structural diagram of a rod position measurement device according to an embodiment; FIG. 5A is a schematic diagram of characteristic points of a rod drop waveform according to an embodiment; FIG. 5B is a schematic diagram of a calculation and analysis result of a drop time of a control rod cluster according to an embodiment; FIG. 6 is a flow chart of measurement and analysis of drop time of a control rod cluster according to an embodiment; FIG. 7A is a flow chart of capturing a rod cluster drop signal according to an embodiment; FIG. 7B is a schematic diagram of a rod cluster drop waveform according to an embodiment; FIG. 8 is a flow chart of searching a maximum drop speed or a local maximum drop speed according to an embodiment; FIG. 9 is a flow chart of searching a time point when a drop speed of a control rod cluster drops rapidly according to an embodiment; and FIG. 10 is a schematic diagram of a calculation and analysis result of drop time of a control rod cluster according to an embodiment.

Referring to FIG. 4, in an embodiment, a rod position measurement device 100 includes a rod position measurement cabinet 20 which provides excitation power supply to a rod position detector 10.

Different from an existing method where a voltage signal of a primary coil of a rod position detector is extracted and transmitted to a rod control device room for rod drop time measurement in a time-division switching manner according to different rod clusters during a test, in embodiments of the present disclosure, a rod drop time measurement and analysis module 21 is arranged (integrated) in a rod position measurement cabinet 20 with a rod drop time measurement and analysis function. The rod drop time measurement and analysis module 21 calculates and analyzes based on a primary coil voltage Up fed back by the rod position detector 10, measurement coil voltages Ua, Ub, Uc, Ud and Ue, and a rod drop reference signal DROPref introduced from a drive mechanism monitoring cabinet 50, to obtain a rod cluster drop waveform and a drop time of a control rod cluster.

The rod drop reference signal DROPref is obtained by adding holding coil current signals each of which is selected from each subgroup of control rods.

It should be noted that during measurement of the drop time of the control rod cluster, a reactor operator in a main control room lifts each group of control rods respectively, and after lifting to top of the reactor, the operator disconnects an excitation power supply of a corresponding rod position measurement channel in the rod position measurement cabinet 20, and disconnects a power supply of the corresponding subgroup in a rod control power distribution cabinet. Accordingly, a power supply disconnection signal is transmitted to the rod position measurement cabinet 20 through the rod drop reference signal DROPref. During this process, the rod drop time measurement and analysis module 21 automatically captures the rod drop signal, records and processes it, and analyzes and calculates the drop time of the control rod cluster.

Referring to FIGs. 5A, 5B and 6, a method for measuring drop time of a control rod cluster integrated with a rod position measurement device is provided, wherein the method is used to measure the drop time of each control rod cluster, and includes: in step S1, monitoring a voltage Ua of coils in Group A to capture a rod cluster drop signal; in step S2, searching a point (tmax, Vmax) with a maximum drop speed or with a local maximum drop speed; in step S3, retroactively calculating, from tmax, an end of a time period T4 when the control rod cluster starts to drop; in step S4, retroactively searching, from a minimum value point of a drop reference signal DROPref, a start of the time period T4 when the drop reference signal DROPref drops from a maximum value to 33% of the maximum value; in step S5, determining, from tmax forward, a time point t6 when a drop speed of the control rod cluster is lower than 0; in step S6, calculating an end of a time period T6 when the drop speed of the control rod cluster is 0; in step S7, searching an end of a time period T5 when the drop speed of the control rod cluster drops rapidly; in step S8, calculating a time point t7 when the drop speed returns to 0 after t6; in step S9, calculating a time point t8 when the drop speed returns to 0 after t7; in step S10, calculating a time point t9 when the drop speed returns to 0 after t8; and in step S11, performing calculation on results obtained in the steps S1 to S11 to obtain calculation results, and saving and outputting the calculation results in a form of file. Referring to FIG. 8, the step S2 includes: in step S2.1, performing digital filtering on a voltage Up of a primary coil to obtain a second filtered voltage; in step S2.2, transforming a waveform of the second filtered voltage into broken lines and removing outlier points on the broken lines; in step S2.3, calculating a second median sequence; in step S2.4, searching among the second median sequence a point P1, wherein absolute values of the point P1 and preceding three points of the point P1 exceed 0.5; in step S2.5, if a value of P1 is negative, inverting the second median sequence; in step S2.6, searching backward, from P1, a point P0 with a value smaller than or equal to 0, and searching forward, from P1, a point P2 with a value smaller than or equal to 0; and in step S2.7, calculating a maximal value among a section between P0 and P2 to obtain Pmax (tmax, Vmax).

Optionally, referring to FIGs. 7A and 7B, the step S1 includes: in step S1.1, performing digital filtering on the voltage Ua of the coils in Group A to obtain a first filtered voltage; in step S1.2, transforming a waveform of the first filtered voltage into broken lines and removing outlier points on the broken lines; in step S1.3, calculating a first median sequence of a result of the step S1.2; in step S1.4, searching a first minimal value point P2 (tmin, Vmin) of the first median sequence; in step S1.5, searching backward, from the first minimal value point, a median point P1 with a value smaller than Vmin/2; in step S1.6, determining a point P0 where a line connecting the first minimal value point P2 and the median point P1 intersects with a 0-axis; and in step S1.7, if a slope of a line connecting P0 and P2, a time difference between P0 and P2, and an amplitude difference between P0 and P2 are within predetermined ranges respectively, determining that the control rod cluster starts to drop.

Optionally, referring to FIGs. 5A and 5B, the step S3 includes: retroactively searching, from tmax, a point P04 with an amplitude smaller than 0.4*Vmax, retroactively searching, from tmax, a point P02 with an amplitude smaller than 0.2*Vmax, and determining an end of the time period T4 where a line connecting P04 and P02 intersects with a 0-axis.

Optionally, the step S4 includes: obtaining a subsequence of a value sequence corresponding to the drop reference signal DROPref before tmax, determining a minimum value point and a maximum value point of the subsequence, and searching backward, from the minimum value point, a point with a value greater than 33% of a maximum value of the subsequence.

Optionally, the step S5 includes: searching, among the second median sequence and from tmax, a point with a value smaller than 0, and setting a time point of the point to be t6.

Optionally, the step S6 includes: determining a point where a line connecting a point corresponding to t6 and a point corresponding to (t6-1) inserts with the 0-axis as an end t6 of the time period T6.

Optionally, referring to FIGs. 9, 5A and 5B, the step S7 includes: in step S7.1, retroactively searching, from t6, a point P05 with an amplitude greater than 50% of Vmax; in step S7.2, retroactively searching, from t6, a point P075 with an amplitude greater than 75% of Vmax; in step S7.3, determining a horizontal line Line1 passing through Pmax (tmax, Vmax); in step S7.4, determining a straight line Line2 passing through P05 and P075; and in step S7.5, determining a point where Line1 intersects with Line2, wherein a time point corresponding to the point is an end of the time period T5.

Optionally, the step S11 includes: in step S11.1, calculating the time period T4 by subtracting the start of T4 from the end of T4, calculating the time period T5 by subtracting the end of T4 from the end of T5, and calculating the time period T6 by subtracting the end of T5 from the end of T6; in step S11.2, verifying that T4, T5, T6 are within a threshold range; in step S11.3, verifying positivity of t7, t8 and t9; and in step S11.4: saving and outputting the calculation results in the form of file.

The calculation and analysis result of the drop time can be found in FIG. 10.

Technical features such as specific type selection of the control rods in the present disclosure may be referred to exiting solutions. Specific structures, working principles, possible control methods and possible spatial arrangements of these technical features may adopt common selections in the art, which should not be regarded as an invention point of the present disclosure, and is not described in detail here.

It is still possible for those skilled in the art to modify technical solutions described in the foregoing embodiments, or to perform equivalent replacements for some of the technical features. Any modifications, equivalent replacements and improvement made within the scope of the appended claims fall into the scope of the present disclosure.

## Claims

1. A method for measuring drop time of a control rod cluster integrated with a rod position measurement device, wherein the method is used to measure the drop time of each control rod cluster, and comprises:
in step S1, monitoring a voltage Ua of coils in a Group A to capture a rod cluster drop signal;
in step S2, searching a point (tmax, Vmax) with a maximum drop speed or with a local maximum drop speed;
in step S3, retroactively calculating, from tmax, an end of a time period T4 when the control rod cluster starts to drop;
in step S4, retroactively searching, from a minimum value point of a drop reference signal DROPref, a start of the time period T4 when the drop reference signal DROPref drops from a maximum value to 33% of the maximum value;
in step S5, determining, from tmax forward, a time point t6 when a drop speed of the control rod cluster is lower than 0;
in step S6, calculating an end of a time period T6 when the drop speed of the control rod cluster is 0;
in step S7, searching an end of a time period T5 when the drop speed of the control rod cluster drops rapidly;
in step S8, calculating a time point t7 when the drop speed returns to 0 after t6;
in step S9, calculating a time point t8 when the drop speed returns to 0 after t7;
in step S10, calculating a time point t9 when the drop speed returns to 0 after t8; and
in step S11, performing calculation on results obtained in the steps S1 to S11 to obtain calculation results, and saving and outputting the calculation results in a form of file;
wherein the step S2 comprises:
in step S2.1, performing digital filtering on a voltage Up of a primary coil to obtain a second filtered voltage;
in step S2.2, transforming a waveform of the second filtered voltage into broken lines and removing outlier points on the broken lines;
in step S2.3, calculating a second median sequence;
in step S2.4, searching among the second median sequence a point P1, wherein absolute values of the point P1 and preceding three points of the point P1 exceed 0.5;
in step S2.5, if a value of P1 is negative, inverting the second median sequence;
in step S2.6, searching backward, from P1, a point P0 with a value smaller than or equal to 0, and searching forward, from P1, a point P2 with a value smaller than or equal to 0; and
in step S2.7, calculating a maximal value among a section between P0 and P2 to obtain Pmax (tmax, Vmax).

2. The method according to claim 1, wherein the step S1 comprises:
in step S1.1, performing digital filtering on the voltage Ua of the coils in the Group A to obtain a first filtered voltage;
in step S1.2, transforming a waveform of the first filtered voltage into broken lines and removing outlier points on the broken lines;
in step S1.3, calculating a first median sequence of a result of the step S1.2;
in step S1.4, searching a first minimal value point P2 (tmin, Vmin) of the first median sequence;
in step S1.5, searching backward, from the first minimal value point, a median point P1 with a value smaller than Vmin/2;
in step S1.6, determining a point P0 where a line connecting the first minimal value point P2 and the median point P1 intersects with a 0-axis; and
in step S1.7, if a slope of a line connecting P0 and P2, a time difference between P0 and P2, and an amplitude difference between P0 and P2 are within predetermined ranges respectively, determining that the control rod cluster starts to drop.

3. The method according to claim 1, wherein the step S3 comprises:
retroactively searching, from tmax, a point P04 with an amplitude smaller than 0.4*Vmax, retroactively searching, from tmax, a point P02 with an amplitude smaller than 0.2*Vmax, and determining an end of the time period T4 where a line connecting P04 and P02 intersects with a 0-axis.

4. The method according to claim 3, wherein the step S4 comprises:
obtaining a subsequence of a value sequence corresponding to the drop reference signal DROPref before tmax, determining a minimum value point and a maximum value point of the subsequence, and searching backward, from the minimum value point, a point with a value greater than 33% of a maximum value of the subsequence.

5. The method according to claim 4, wherein the step S5 comprises:
searching, among the second median sequence and from tmax, a point with a value smaller than 0, and setting a time point corresponding to the point to be t6.

6. The method according to claim 5, wherein the step S6 comprises:
determining a point where a line connecting a point corresponding to t6 and a point corresponding to (t6-1) inserts with the 0-axis as an end t6 of the time period T6.

7. The method according to claim 6, wherein the step S7 comprises:
in step S7.1, retroactively searching, from t6, a point P05 with an amplitude greater than 50% of Vmax;
in step S7.2, retroactively searching, from t6, a point P075 with an amplitude greater than 75% of Vmax;
in step S7.3, determining a horizontal line Line1 passing through Pmax (tmax, Vmax);
in step S7.4, determining a straight line Line2 passing through P05 and P075; and
in step S7.5, determining a point where Line1 intersects with Line2, wherein a time point corresponding to the point is an end of the time period T5.

8. The method according to claim 7, wherein the step S11 comprises:
in step S11.1, calculating the time period T4 by subtracting the start of T4 from the end of T4, calculating the time period T5 by subtracting the end of T4 from the end of T5, and calculating the time period T6 by subtracting the end of T5 from the end of T6;
in step S11.2, verifying that T4, T5, T6 are within a threshold range;
in step S11.3, verifying positivity of t7, t8 and t9; and
in step S11.4, saving and outputting the calculation results in the form of file.

## Patentansprüche

1. Verfahren zur Messung der Fallzeit eines Steuerstabclusters, das mit einer Stabpositionsmessvorrichtung integriert ist, wobei das Verfahren zur Messung der Fallzeit jedes einzelnen Steuerstabclusters dient und Folgendes umfasst:
in Schritt S1: Überwachen einer Spannung Ua von Spulen in einer Gruppe A, um ein Fall-Signal des Stabclusters zu erfassen;
in Schritt S2: Suchen eines Punktes (tmax, Vmax) mit einer maximalen Fallgeschwindigkeit oder mit einer lokalen maximalen Fallgeschwindigkeit;
in Schritt S3 die rückwirkende Berechnung eines Endpunkts eines Zeitraums T4 ausgehend von tmax, zu dem die Steuerstabcluster zu fallen beginnen;
in Schritt S4 die rückwirkende Suche nach einem Startpunkt des Zeitraums T4 ausgehend von einem Minimalwertpunkt eines Fallreferenzsignals DROPref, zu dem das Fallreferenzsignal DROPref von einem Maximalwert auf 33 % des Maximalwerts abfällt;
in Schritt S5 wird ausgehend von tmax ein Zeitpunkt t6 bestimmt, zu dem eine Fallgeschwindigkeit des Steuerstabclusters kleiner als 0 ist;
in Schritt S6 wird ein Ende eines Zeitraums T6 berechnet, zu dem die Fallgeschwindigkeit des Steuerstabclusters 0 beträgt;
in Schritt S7 wird das Ende eines Zeitraums T5 ermittelt, in dem die Fallgeschwindigkeit des Steuerstabclusters rapide abfällt;
in Schritt S8 wird ein Zeitpunkt t7 berechnet, zu dem die Fallgeschwindigkeit nach t6 wieder auf 0 zurückkehrt;
in Schritt S9 wird ein Zeitpunkt t8 berechnet, zu dem die Fallgeschwindigkeit nach t7 wieder auf 0 zurückkehrt;
in Schritt S10 wird ein Zeitpunkt t9 berechnet, zu dem die Fallgeschwindigkeit nach t8 wieder auf 0 zurückkehrt; und
in Schritt S11 werden die in den Schritten S1 bis S11 erhaltenen Ergebnisse berechnet, um Berechnungsergebnisse zu erhalten, und die Berechnungsergebnisse werden in Form einer Datei gespeichert und ausgegeben;
wobei der Schritt S2 umfasst:
in Schritt S2.1 wird eine digitale Filterung der Spannung Up einer Primärspule durchgeführt, um eine zweite gefilterte Spannung zu erhalten;
in Schritt S2.2 das Umwandeln einer Wellenform der zweiten gefilterten Spannung in gebrochene Linien und das Entfernen von Ausreißerpunkten auf den gebrochenen Linien;
in Schritt S2.3 das Berechnen einer zweiten Medianfolge;
in Schritt S2.4 das Suchen eines Punktes P1 in der zweiten Medianfolge, wobei die Absolutwerte des Punktes P1 und der drei dem Punkt P1 vorausgehenden Punkte 0,5 überschreiten;
in Schritt S2.5, falls ein Wert von P1 negativ ist, Umkehrung der zweiten Medianfolge;
in Schritt S2.6 wird rückwärts von P1 ausgehend nach einem Punkt P0 mit einem Wert kleiner oder gleich 0 gesucht und vorwärts von P1 ausgehend nach einem Punkt P2 mit einem Wert kleiner oder gleich 0 gesucht; und
in Schritt S2.7 wird ein Maximalwert innerhalb eines Abschnitts zwischen P0 und P2 berechnet, um Pmax (tmax, Vmax) zu erhalten.

2. Verfahren nach Anspruch 1, wobei der Schritt S1 umfasst:
in Schritt S1.1: Durchführen einer digitalen Filterung der Spannung Ua der Spulen in der Gruppe A, um eine erste gefilterte Spannung zu erhalten;
in Schritt S1.2: Umwandeln einer Wellenform der ersten gefilterten Spannung in gebrochene Linien und Entfernen von Ausreißerpunkten auf den gebrochenen Linien;
in Schritt S1.3 die Berechnung einer ersten Medianfolge aus dem Ergebnis von Schritt S1.2;
in Schritt S1.4 die Suche nach einem ersten Minimalwertpunkt P2 (tmin, Vmin) der ersten Medianfolge;
in Schritt S1.5 die rückwärtsgerichtete Suche ausgehend vom ersten Minimalwertpunkt nach einem Medianpunkt P1 mit einem Wert kleiner als Vmin/2;
in Schritt S1.6 Bestimmung eines Punktes P0, an dem eine Gerade, die den ersten Minimalwertpunkt P2 und den Medianpunkt P1 verbindet, die 0-Achse schneidet; und
in Schritt S1.7, falls die Steigung einer Geraden, die P0 und P2 verbindet, die Zeitdifferenz zwischen P0 und P2 sowie die Amplitudendifferenz zwischen P0 und P2 jeweils innerhalb vorgegebener Bereiche liegen, Feststellung, dass der Steuerstabcluster zu sinken beginnt.

3. Verfahren nach Anspruch 1, wobei der Schritt S3 umfasst:
rückwärts von tmax aus einen Punkt P04 mit einer Amplitude kleiner als 0,4*Vmax zu suchen, rückwärts von tmax aus einen Punkt P02 mit einer Amplitude kleiner als 0,2*Vmax zu suchen und ein Ende des Zeitraums T4 zu bestimmen, an dem eine Gerade, die P04 und P02 verbindet, die 0-Achse schneidet.

4. Verfahren nach Anspruch 3, wobei der Schritt S4 umfasst:
Ermitteln einer Teilfolge einer Wertfolge, die dem Fallreferenzsignal DROPref vor tmax entspricht, Bestimmen eines Minimalwertpunkts und eines Maximalwertpunkts der Teilfolge sowie rückwärts Suchen, ausgehend vom Minimalwertpunkt, eines Punkts mit einem Wert, der größer ist als 33 % eines Maximalwerts der Teilfolge.

5. Verfahren nach Anspruch 4, wobei der Schritt S5 umfasst:
das Suchen eines Punktes mit einem Wert kleiner als 0 in der zweiten Medianfolge ausgehend von tmax und das Festlegen eines diesem Punkt entsprechenden Zeitpunkts als t6.

6. Verfahren nach Anspruch 5, wobei der Schritt S6 umfasst:
Festlegen eines Punktes, an dem eine Gerade, die einen Punkt, der t6 entspricht, mit einem Punkt, der (t6-1) entspricht, verbindet, die 0-Achse schneidet, als Ende t6 des Zeitraums T6.

7. Verfahren nach Anspruch 6, wobei der Schritt S7 umfasst:
in Schritt S7.1 das rückwärtsgerichtete Suchen eines Punktes P05 ausgehend von t6, dessen Amplitude größer als 50 % von Vmax ist;
in Schritt S7.2 das rückwärtsgerichtete Suchen eines Punktes P075 ausgehend von t6, dessen Amplitude größer als 75 % von Vmax ist;
in Schritt S7.3 das Bestimmen einer horizontalen Geraden Line1, die durch Pmax (tmax, Vmax) verläuft;
in Schritt S7.4 das Bestimmen einer Geraden Line2, die durch P05 und P075 verläuft; und
in Schritt S7.5 das Bestimmen eines Schnittpunkts von Line1 und Line2, wobei ein diesem Punkt entsprechender Zeitpunkt ein Ende des Zeitraums T5 darstellt.

8. Verfahren nach Anspruch 7, wobei der Schritt S11 umfasst:
in Schritt S11.1 die Berechnung des Zeitraums T4 durch Subtraktion des Anfangs von T4 vom Ende von T4, die Berechnung des Zeitraums T5 durch Subtraktion des Endes von T4 vom Ende von T5 und die Berechnung des Zeitraums T6 durch Subtraktion des Endes von T5 vom Ende von T6;
in Schritt S11.2 die Überprüfung, ob T4, T5 und T6 innerhalb eines Schwellenwertbereichs liegen;
in Schritt S11.3 die Überprüfung, ob t7, t8 und t9 positiv sind; und
in Schritt S11.4 das Speichern und Ausgeben der Berechnungsergebnisse in Form einer Datei.

## Revendications

1. Procédé de mesure du temps de chute d'un ensemble de barres de commande intégré à un dispositif de mesure de la position des barres, dans lequel le procédé est utilisé pour mesurer le temps de chute de chaque ensemble de barres de commande, et comprend :
à l'étape S1, la surveillance d'une tension Ua des bobines d'un groupe A afin de capter un signal de chute de l'ensemble de barres ;
à l'étape S2, la recherche d'un point (tmax, Vmax) correspondant à une vitesse de chute maximale ou à un maximum local de vitesse de chute ;
à l'étape S3, le calcul rétroactif, à partir de tmax, de la fin d'un intervalle de temps T4 pendant lequel le groupe de barres de commande commence à descendre ;
à l'étape S4, la recherche rétroactive, à partir d'un point de valeur minimale d'un signal de référence de chute DROPref, du début de l'intervalle de temps T4 pendant lequel le signal de référence de chute DROPref passe d'une valeur maximale à 33 % de cette valeur maximale ;
à l'étape S5, déterminer, à partir de tmax vers l'avant, un instant t6 auquel la vitesse de chute du faisceau de barres de contrôle est inférieure à 0 ;
à l'étape S6, calculer la fin d'un intervalle de temps T6 pendant lequel la vitesse de chute du faisceau de barres de contrôle est égale à 0 ;
à l'étape S7, rechercher la fin d'une période T5 au cours de laquelle la vitesse de chute du faisceau de barres de commande diminue rapidement ;
à l'étape S8, calculer un instant t7 où la vitesse de chute revient à 0 après t6 ;
à l'étape S9, calculer un instant t8 où la vitesse de chute revient à 0 après t7 ;
à l'étape S10, calculer un instant t9 où la vitesse de chute revient à 0 après t8 ; et
à l'étape S11, effectuer des calculs sur les résultats obtenus aux étapes S1 à S11 pour obtenir des résultats de calcul, puis enregistrer et exporter ces résultats sous forme de fichier ;
dans lequel l'étape S2 comprend :
à l'étape S2.1, appliquer un filtrage numérique à une tension Up d'une bobine primaire pour obtenir une deuxième tension filtrée ;
à l'étape S2.2, transformer la forme d'onde de la deuxième tension filtrée en lignes brisées et supprimer les points aberrants sur les lignes brisées ;
à l'étape S2.3, calculer une deuxième séquence médiane ;
à l'étape S2.4, rechercher dans la deuxième séquence médiane un point P1, pour lequel les valeurs absolues du point P1 et des trois points précédant le point P1 dépassent 0,5 ;
à l'étape S2.5, si la valeur de P1 est négative, inverser la deuxième séquence médiane ;
à l'étape S2.6, rechercher en amont, à partir de P1, un point P0 dont la valeur est inférieure ou égale à 0, et rechercher en aval, à partir de P1, un point P2 dont la valeur est inférieure ou égale à 0 ; et
à l'étape S2.7, calculer une valeur maximale parmi une section comprise entre P0 et P2 pour obtenir Pmax (tmax, Vmax).

2. Procédé selon la revendication 1, dans lequel l'étape S1 comprend :
à l'étape S1.1, effectuer un filtrage numérique sur la tension Ua des bobines du groupe A afin d'obtenir une première tension filtrée ;
à l'étape S1.2, transformer la forme d'onde de la première tension filtrée en lignes brisées et supprimer les points aberrants sur ces lignes brisées ;
à l'étape S1.3, le calcul d'une première séquence médiane du résultat de l'étape S1.2 ;
à l'étape S1.4, la recherche d'un premier point de valeur minimale P2 (tmin, Vmin) de la première séquence médiane ;
à l'étape S1.5, la recherche en amont, à partir du premier point de valeur minimale, d'un point médian P1 dont la valeur est inférieure à Vmin/2 ;
à l'étape S1.6, déterminer un point P0 où une droite reliant le premier point de valeur minimale P2 et le point médian P1 coupe l'axe zéro ; et
à l'étape S1.7, si la pente d'une droite reliant P0 et P2, la différence de temps entre P0 et P2 et la différence d'amplitude entre P0 et P2 se situent respectivement dans des plages prédéterminées, déterminer que le groupe de barres de commande commence à descendre.

3. Procédé selon la revendication 1, dans lequel l'étape S3 comprend :
la recherche rétroactive, à partir de tmax, d'un point P04 ayant une amplitude inférieure à 0,4*Vmax, la recherche rétroactive, à partir de tmax, d'un point P02 ayant une amplitude inférieure à 0,2*Vmax, et la détermination de la fin de la période T4 à l'intersection d'une droite reliant P04 et P02 avec l'axe des zéros.

4. Procédé selon la revendication 3, dans lequel l'étape S4 comprend :
l'obtention d'une sous-séquence d'une séquence de valeurs correspondant au signal de référence de chute DROPref avant tmax, la détermination d'un point de valeur minimale et d'un point de valeur maximale de la sous-séquence, et la recherche en amont, à partir du point de valeur minimale, d'un point dont la valeur est supérieure à 33 % de la valeur maximale de la sous-séquence.

5. Procédé selon la revendication 4, dans lequel l'étape S5 comprend :
la recherche, parmi la deuxième séquence médiane et à partir de tmax, d'un point dont la valeur est inférieure à 0, et la définition d'un instant correspondant à ce point comme étant t6.

6. Procédé selon la revendication 5, dans lequel l'étape S6 comprend :
la détermination d'un point où une droite reliant un point correspondant à t6 et un point correspondant à (t6-1) coupe l'axe zéro comme extrémité t6 de la période T6.

7. Procédé selon la revendication 6, dans lequel l'étape S7 comprend :
à l'étape S7.1, la recherche rétroactive, à partir de t6, d'un point P05 présentant une amplitude supérieure à 50 % de Vmax ;
à l'étape S7.2, la recherche rétroactive, à partir de t6, d'un point P075 présentant une amplitude supérieure à 75 % de Vmax ;
à l'étape S7.3, la détermination d'une ligne horizontale Ligne1 passant par Pmax (tmax, Vmax) ;
à l'étape S7.4, la détermination d'une ligne droite Ligne2 passant par P05 et P075 ; et
à l'étape S7.5, la détermination d'un point d'intersection entre Ligne1 et Ligne2, l'instant correspondant à ce point constituant la fin de la période T5.

8. Procédé selon la revendication 7, dans lequel l'étape S11 comprend :
à l'étape S11.1, le calcul de la période T4 en soustrayant le début de T4 de la fin de T4, le calcul de la période T5 en soustrayant la fin de T4 de la fin de T5, et le calcul de la période T6 en soustrayant la fin de T5 de la fin de T6 ;
à l'étape S11.2, la vérification que T4, T5 et T6 se situent dans une plage seuil ;
à l'étape S11.3, la vérification que t7, t8 et t9 sont positifs ; et
à l'étape S11.4, l'enregistrement et la sortie des résultats de calcul sous forme de fichier.
